Europäisches Patentamt

European Patent Office

Office européen des brevets

(19)

(11) Numéro de publication : **0 497 693 A1**

(12) # DEMANDE DE BREVET EUROPEEN

(21) Numéro de dépôt : **92400226.4**

(22) Date de dépôt : **29.01.92**

(51) Int. Cl.$^5$ : **H04N 1/00**

(30) Priorité : **31.01.91 FR 9101077**

(43) Date de publication de la demande :
**05.08.92 Bulletin 92/32**

(84) Etats contractants désignés :
**BE ES FR GB IT LU NL**

(71) Demandeur : **ALCATEL BUSINESS SYSTEMS**
**12, rue de la Baume**
**F-75008 Paris (FR)**

(72) Inventeur : **Riousset, Denis**
**25bis, rue des Econdeaux**
**F-93800 Epinay sur Seine (FR)**
Inventeur : **Richiero, Jean-Louis**
**58, avenue Louis Bordes**
**F-93240 Stains (FR)**

(74) Mandataire : **Weinmiller, Jürgen et al**
**Lennéstrasse 9 Postfach 24**
**W-8133 Feldafing (DE)**

(54) **Architecture de terminal téléphonique télécopieur.**

(57) Le boîtier du terminal comporte, d'une part, un socle (1) dans lequel sont regroupés des circuits correspondants respectivement à un circuit téléphonique (4) et à une alimentation en énergie (5), une bobine (8) de ruban (9) support d'impression, un ou des moteurs (6) actionnant des rouleaux d'entraînement (10, 11) pour document à télécopier et pour ruban support d'impression et un dispositif de coupe de ruban, d'autre part, un couvercle rabattable (2) qui, regroupant au moins un agencement de communication homme-machine (16,17), une logique de supervision (13) et des têtes (14, 15) d'analyse et d'impression, est articulé au niveau d'une extrémité sur le socle pour alternativement soit se rabattre sur ce socle en fermant le boîtier et en positionnant les têtes par rapport aux rouleaux qui leurs sont associés, soit s'ouvrir par basculement en donnant accès aux composants essentiels tant à l'intérieur du socle qu'à l'intérieur du couvercle.

FIG.1

EP 0 497 693 A1

Jouve, 18, rue Saint-Denis, 75001 PARIS

La présente invention a pour objet une architecture de terminal téléphonique télécopieur, en particulier pour télécopieur éventuellement photocopieur ou encore pour téléphone incorporant un télécopieur.

L'évolution des terminaux, comme celle d'autres appareils dont l'usage se banalise, s'oriente vers une réduction de leur encombrement destinée à faciliter leur implantation et une simplification de leur exploitation et de leur entretien courant, l'une et l'autre permettant d'augmenter le confort d'utilisation et par conséquent de mieux satisfaire les usagers.

Dans la mesure où la télécopie a pour caractéristique de permettre la reproduction à distance d'un document graphique sous la forme d'un autre document graphique géométriquement semblable à l'original, les télécopieurs ont un encombrement relativement important qui est au moins partiellement fonction des dimensions généralement non négligeables des documents à reproduire.

Ceci constitue souvent un inconvénient pour l'usager sachant que les locaux où sont installés les télécopieurs sont classiquement des locaux à usage général, tels que des bureaux ou des pièces d'habitation, déjà largement occupés dans lesquels les utilisateurs désirent ne réserver qu'un emplacement le plus réduit possible tant pour l'installation de leurs divers appareillages auxiliaires que pour leur exploitation.

Dans cette même optique, les usagers souhaitent que les interventions de personnel d'entretien spécialisé sur le matériel soit réduites à l'indispensable pour limiter au maximum les perturbations temporaires d'exploitation des appareils et d'utilisation des locaux qui en sont la conséquence.

Ceci conduit donc à réétudier les appareils existants pour tenter de les réorganiser de manière encore plus efficace et fiable notamment par simplification.

L'invention propose donc une architecture de terminal téléphonique télécopieur, notamment pour poste téléphonique incorporant un télécopieur, éventuellement photocopieur ou encore pour simple télécopieur, cette architecture procurant conjointement une réduction d'encombrement et une simplification au niveau de l'exploitation et notamment de l'entretien courant.

De manière usuelle, cette architecture comporte un boîtier constitué d'éléments de carrosserie dissociables qui contient au moins les composants essentiels suivants:

– une tête d'analyse associée à un rouleau, dit d'analyse, contigu, prévu pour assurer l'entraînement devant cette tête d'un document à télécopier introduit entre eux, depuis une ouverture d'accès ménagée dans le boîtier et sous l'action d'un dispositif entraîneur situé dans l'environnement de cette ouverture d'accès,

– une tête d'impression associée à un rouleau, dit d'impression, contigu, prévu pour assurer l'entraînement, devant cette tête et vers une ouverture de sortie du boîtier, d'un ruban support d'impression qui est initialement introduit par une extrémité entre ce rouleau et cette tête d'impression et qui est stocké sous forme de bobine dans le boîtier,

– au moins un moteur électrique, pour actionner les rouleaux et optionnellement un dispositif de coupe de ruban qui est situé sur le trajet du ruban dans le boîtier entre l'ouverture de sortie et l'ensemble formé par la tête et le rouleau d'impression,

– un agencement de communication homme-machine permettant une commande locale du terminal téléphonique télécopieur par un usager et une signalisation locale par voie optique et/ou acoustique,

– un ensemble de circuits comprenant au moins un circuit téléphonique, une logique de supervision du terminal et une alimentation en énergie.

Selon une caractéristique de l'invention, le boîtier comporte, d'une part, un socle dans lequel sont regroupés les circuits correspondants respectivement au circuit téléphonique et à l'alimentation en énergie, le ou les moteurs avec les rouleaux et optionnellement le dispositif de coupe que ces moteurs actionnent, ainsi que la bobine de ruban, et d'autre part, un couvercle rabattable qui, regroupant au moins l'agencement de communication homme-machine, la logique de supervision associée et les têtes, est articulé au niveau d'une extrémité sur une extrémité correspondante du socle pour alternativement soit se rabattre sur le socle en fermant le boîtier et en positionnant les têtes par rapport aux rouleaux qui leurs sont associés, soit s'ouvrir par basculement en donnant accès aux composants essentiels tant à l'intérieur du socle qu'à l'intérieur du couvercle.

L'invention, ses caractéristiques et ses avantages sont précisés dans la description qui suit, en liaison avec les figures répertoriées ci-dessous.

Les figures 1 et 2 présentent chacune une même coupe latérale d'un terminal téléphonique télécopieur selon l'invention vu fermé dans un cas et ouvert dans l'autre.

La figure 3 présente une perspective simplifiée du terminal téléphonique télécopieur selon l'invention, en position ouverte.

La figure 4 présente une perspective d'une variante de terminal, de type poste téléphonique d'abonné intégrant un télécopieur.

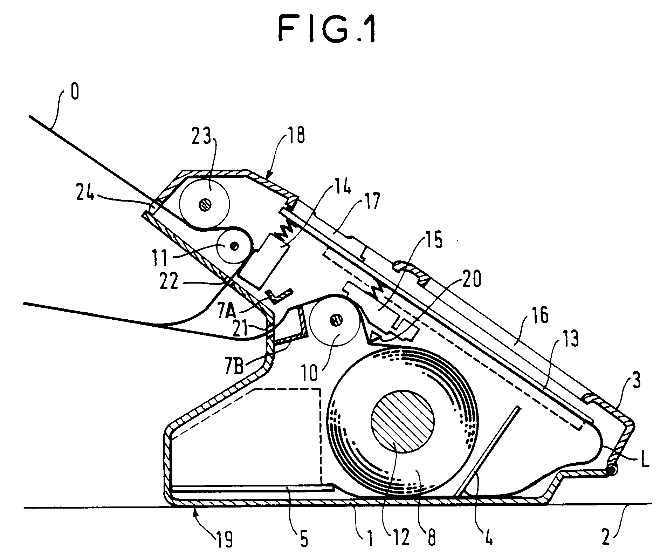

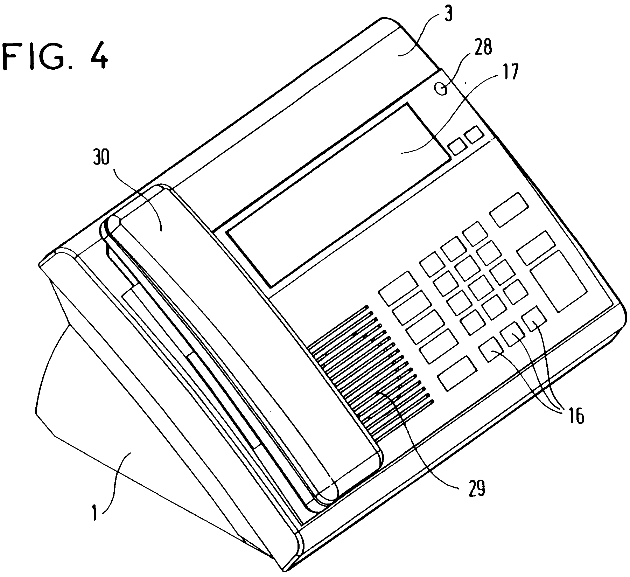

Le terminal téléphonique télécopieur présenté sur les figures 1 à 3 et celui présenté en figure 4 sont classiquement constitués d'éléments de carrosserie dissociables qui forment un boîtier lorsqu'ils sont assemblés et qui sont destinés à contenir la majorité sinon la totalité des composants que chaque terminal comporte.

Dans les réalisations proposées, le boîtier du terminal comporte un socle 1, en forme de caisson, ouvert à sa partie supérieure et destiné à reposer par sa base sur un support plan 2 préférablement horizontal, tel qu'un plateau de table ou de bureau.

Un couvercle rabattable 3 et ici intérieurement creux vient s'articuler à une extrémité du socle 1 pour permettre alternativement soit la fermeture du boîtier par recouvrement de la partie supérieure ouverte du socle par le couvercle, soit l'ouverture du boîtier par basculement du couvercle pour donner accès, dans ce dernier cas, aux divers composants du terminal téléphonique télécopieur qui sont accessibles tant à l'intérieur du socle qu'à celui du couvercle.

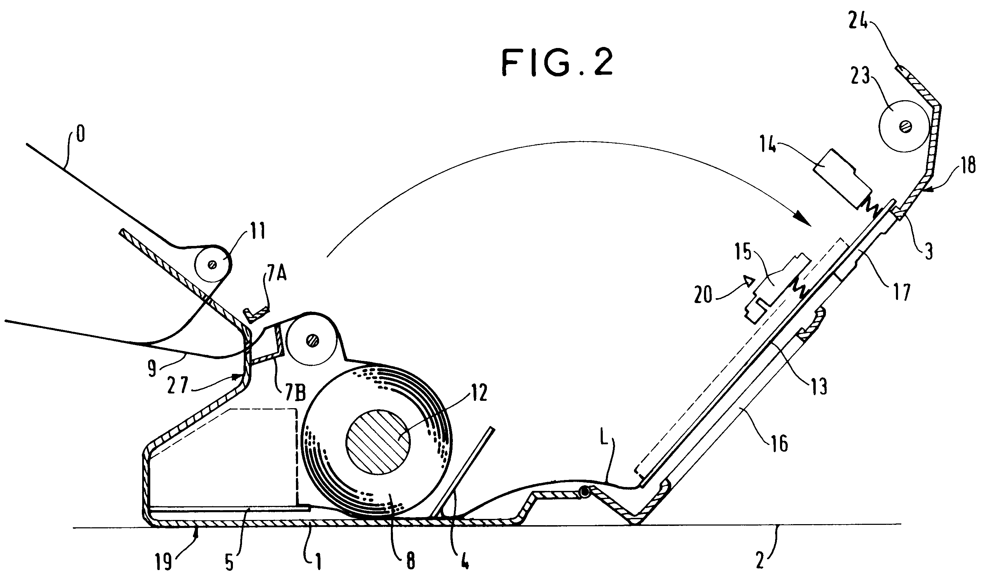

Dans la réalisation proposée, le socle 1 contient des circuits électriques et/ou électroniques qui sont essentiellement un circuit téléphonique 4 permettant l'émission et la réception de télécopies par voie téléphonique et une alimentation en énergie électrique 5. Le circuit téléphonique 4 qui est généralement porté par une carte de circuit imprimé comme présenté sur les figures 1 et 2, sa constitution supposée classique n'est pas évoquée ici car elle est sans rapport direct avec l'objet de l'invention.

L'alimentation en énergie électrique 5 est classiquement relié à une source d'énergie généralement en courant alternatif extérieur au terminal, le plus souvent un réseau de distribution public et elle assure de manière connue en soi les conversions et adaptations de niveau nécessaires à l'alimentation en énergie des circuits et composants du terminal qui ne sont pas alimentés par l'intermédiaire de la ligne téléphonique, non représentée, à laquelle se raccorde le terminal pour ses échanges avec d'autres terminaux téléphoniques.

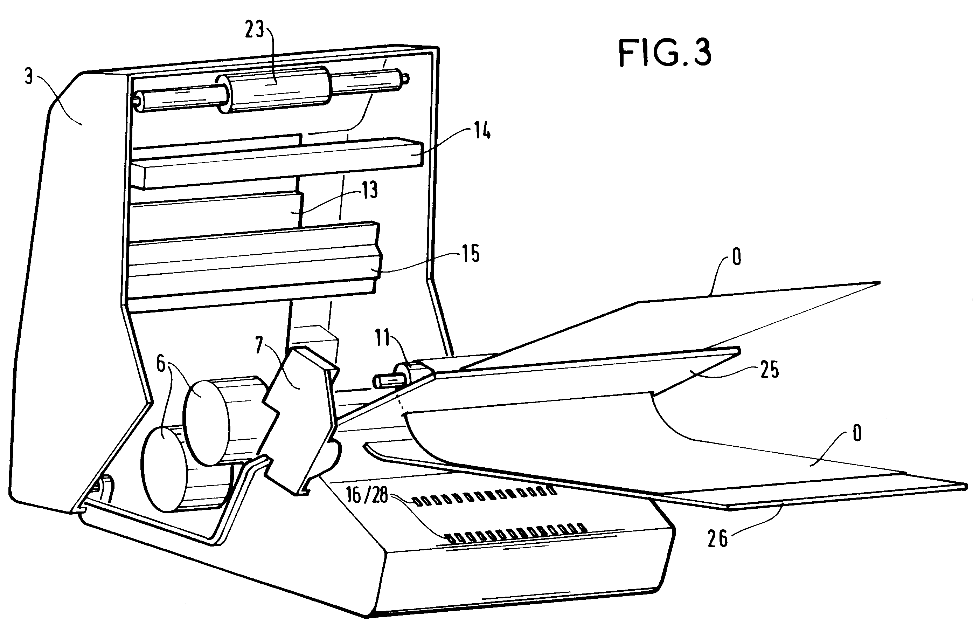

Un ou des moteurs d'entraînement 6 - figure 3 - et un actionneur 7 d'un dispositif de coupe, ici supposé muni de deux lames 7A et 7B, sont ainsi dépendants de l'alimentation 5 pour leurs besoins en énergie, ils sont ici logés dans le socle 1 dont ils sont solidaires.

Ce socle 1 contient aussi une bobine 8 de ruban support d'impression 9 permettant à l'utilisateur de disposer d'une grande longueur de ruban sectionnable à la demande pour l'impression des documents qui sont transmis au terminal par télécopie, via la ligne téléphonique.

Dans l'exemple de réalisation proposé ,le ruban support d'impression 9 est de type papier pour impression thermique et il a par exemple une largeur correspondant à celle d'une feuille de document de type courrier classique par exemple correspondant à celle des documents de format normalisé A4, telle la feuille 0.

Deux rouleaux d'entraînement 10 et 11, respectivement dits d'impression et d'analyse, sont également disposés dans le socle 1, parallèlement à l'arbre 12 de la bobine 8, ils ont une longueur qui est fonction de la largeur maximale admise par le terminal téléphonique télécopieur tant pour les documents à télécopier que pour ceux à imprimer.

La mise en rotation des rouleaux d'entraînement 10 et 11 est assurée par le ou les moteurs 6 en fonction des commandes fournies à ce moteur par une logique de supervision 13 suite à une commande locale ou distante de télécopie.

De manière connue le terminal téléphonique télécopieur doit aussi comporter une tête 14 d'analyse de documents à télécopier, une tête 15 d'impression sur ruban des documents transmis par télécopie et un agencement de communication homme-machine.

Cet agencement de communication est susceptible de varier dans sa constitution selon le type du terminal considéré ainsi qu'on le voit sur la figure 3 relative à un télécopieur simple et sur la figure 4 relative à un téléphone incorporant un télécopieur. Il est composé notamment d'organes de commande manuelle pour la commande locale du terminal par un usager, par exemple de touches 16 de clavier, et d'organes de signalisation locale, par exemple des voyants lumineux 28 éventuellement incorporés aux touches 16 de clavier, un écran d'affichage 17, ainsi que d'un haut-parleur 29 de signalisation sonore dans le cas d'un télécopieur simple, éventuellement photocopieur. Il comporte de plus un combiné téléphonique 30 et/ou un microphone associé au haut-parleur pour un usage téléphonique de type mains libres, s'il est aussi destiné à assurer les fonctions de communications vocales d'un téléphone.

Les têtes 14, 15 et l'agencement de communication homme-machine sont ici rendus solidaires du couvercle 2 à l'intérieur duquel est également logée au moins une partie de la logique de supervision 13 classiquement réalisée sur une carte de circuit imprimé, comme montré sur les figures, les têtes étant usuellement montées élastiques.

Dans la réalisation proposée, les organes de commande manuelle et ceux de signalisation locale, notamment les touches du clavier 16 et l'écran d'affichage, sont disposés sur une façade du boîtier qui est constituée par une face externe 18 du couvercle 2 qui est disposée à la partie supérieure du boîtier, lorsque celui-ci, fermé, est posé par sa base sur un support horizontal 2.

De plus cette face externe 18 est ici inclinée vers l'avant du socle par rapport au plan d'appui 19 de la base du socle sur le support 2 et par conséquent vers l'usager, cet avant du socle et par conséquent du boîtier, correspondant ici à la zone où le couvercle 2 s'articule sur le socle 1.

L'inclinaison de la façade par rapport au plan d'appui est ici de l'ordre de trente degrés de manière à faciliter l'exploitation des touches et la visualisation des informations fournies tant par les éventuels voyants lumineux que par l'écran d'affichage 17, notamment si celui-ci est de type afficheur à cristaux liquides.

Dans la réalisation proposée, la carte de circuit, sur lequel est réalisée au moins une partie de la logique de supervision 13 du terminal téléphonique télécopieur est disposée à l'intérieur du couvercle 2 en regard et pratiquement contre des organes de commande manuelle et de signalisation locale qui sont ainsi directement connectés aux pistes conductrices non représentées que porte cette carte pour unir ces organes à cette logique.

Ces pistes conductrices sont aussi reliées soit directement, soit par des liaisons intermédiaires, non représentées d'une part à la tête d'analyse 14 d'autre part à la tête d'impression 15 pour les échanges de signaux de ces têtes avec la logique de supervision et avec le circuit téléphonique 4; elles assurent aussi la fourniture d'énergie électrique aux divers composants consommateurs qui sont solidaires du couvercle, à partir de l'alimentation 5.

A cet effet des liaisons souples de connexion L, par exemple contenues dans un câble multiconducteur plat, cheminent entre socle 1 et couvercle 2 dans la zone d'articulation commune à ces derniers et relient entre elles les cartes, telles 4 et 5 solidaires du socle à celle, préférablement unique qui est solidaire du couvercle 2, soit ici la carte portant la logique de supervision 13.

L'ouverture du couvercle 2 par basculement permet en conséquence d'accéder aux différents composants évoqués ci-dessus tant à l'intérieur du socle 1 qu'à l'intérieur du couvercle.

La fermeture du couvercle 2 par rabattement sur le socle 1 ferme l'ouverture supérieure de ce dernier par laquelle il est autrement possible d'accéder aux composants que ce socle contient.

Ce rabattement du couvercle sur le socle assure le positionnement des têtes d'analyse 14 et d'impression 15 par rapport aux rapport aux rouleaux d'entraînement 11 et 10 auxquels elles doivent respectivement être associées pour permettre le fonctionnement normal du terminal téléphonique télécopieur.

De manière classique les têtes d'analyse et d'impression sont l'une et l'autre de type barrette comme on le voit sur la figure 3, ayant chacune une longueur correspondant à la largeur maximale admise par le terminal téléphonique télécopieur tant pour les documents à télécopier que pour ceux à imprimer, de même que les rouleaux avec lesquelles elles coopèrent.

Chaque tête 14 ou 15 vient se placer de manière à être contiguë à l'un des rouleaux d'entraînement 11 ou 10 auquel elle est parallèle et pratiquement tangente par sa partie active.

Une extrémité du ruban 9 initialement située à la périphérie de la bobine 8 doit initialement être introduite dans la zone de contiguïté entre rouleau 10 et tête 15 d'impression, classiquement après avoir été aplanie par une unité de planage à lame de cintrage 20, ici supposée solidaire du couvercle 2 sur lequel elle est élastiquement montée.

Une telle unité de planage est notamment décrite dans le document EP-A-0374827, elle permet de contrarier la tendance à l'enroulement que comporte une portion de ruban dévidé de la bobine.

Le rouleau 10 est chargé d'entraîner par frottement une portion de ruban dévidé de manière qu'il passe progressivement devant la partie dite active de tête d'impression pour y recevoir des graphismes correspondants à ceux du document initial télécopié que reçoit le terminal via la ligne téléphonique à laquelle ce terminal est raccordé.

Dans l'exemple de réalisation envisagé, cette impression est supposée classiquement obtenue par transfert de chaleur de la tête d'impression 15 au ruban 9 support d'impression sur lequel sont successivement télécopiés les documents par balayage selon une dimension qui est supposée ici être la longueur, la tête 15 imprimant simultanément une zone de document prise en largeur.

Le dispositif de coupe est classiquement placé sur le trajet de ruban dans le boîtier qui se développe entre une ouverture 21 de sortie de ruban hors du boîtier et l'ensemble d'impression formé par le rouleau 10 et la tête 15.

Ce dispositif de coupe comporte par exemple deux lames de cisaillage 7A, 7B qui sont mues par un actionneur latéral 7 et dont la longueur correspond à la largeur maximale prévue pour les documents télécopiés et par conséquent à celle du ruban 9, ces lames sont disposées de part et d'autre du trajet prévu pour le ruban vers l'ouverture de sortie 21 et sont prévues pour être actionnées sous la commande de la logique de supervision 13, après impression par la tête 20 d'une page de document sur le ruban 9 de manière à découper chaque page imprimée.

Dans l'exemple de réalisation proposé, l'ouverture de sortie 21 est constituée par une fente qui est ménagée en face arrière de socle 1 et qui s'étend longitudinalement selon un axe parallèle au plan d'appui 19 du socle sur un support.

Cette ouverture 21 de sortie de ruban 9 est ici ménagée dans un renfoncement 27 de la paroi qui est destiné à réduire au maximum la longueur du trajet interne du ruban entre cette sortie et la zone où le ruban quitte le rouleau après impression au niveau de la zone de contiguïté entre ce rouleau et la tête d'impression 15. Une seconde ouverture 22 est ici ménagée dans le renfoncement 27 situé à l'arrière du socle 1, au dessus de l'ouverture 21, ces deux ouvertures d'approximativement mêmes dimensions ayant des axes longitudinaux préférablement parallèles, d'une part, entre eux et aux axes des rouleaux 10 et 11, d'autre part, au plan d'appui 19 du socle 1.

L'ouverture 22 est destinée à permettre la sortie des documents à télécopier pour transmission à distance, elle est située en aval de l'ensemble formé par le rouleau 11 et la tête 14 d'analyse entre lesquels chaque feuille 0 de document à télécopier vient s'insérer, sous l'action conjuguée du rouleau 11 et d'un rouleau 23 d'un dispositif situé au niveau d'une ouverture 24 d'accès pour document à télécopier.

Le rouleau 23 est par exemple l'un des éléments constitutifs d'un dépileur comportant aussi un frotteur non représenté ici, un exemple de dépileur étant notamment décrit dans le document EP-A-0374826.

De manière connue un tel dépileur permet de séparer les diverses feuilles de documents empilés sur un plateau support, tel que 25 en figure 3, par entraînement de l'une d'entre elles par le rouleau 23 alors que la suivante et par conséquent les autres sont retenues par l'action du frotteur.

L'ouverture d'accès 24 débouche à l'extérieur du boîtier du terminal au niveau supérieur du plateau 23 et dessus de l'ouverture 22 de sortie par où sont expulsés les feuilles de document préalablement introduites pour télécopie par son intermédiaire, elle possède préférablement un axe longitudinal parallèle aux axes correspondants des autres ouvertures 21 et 22.

Dans la réalisation présentée, le rouleau du dispositif entraîneur 23 est logé à l'intérieur du couvercle 2 dont il est solidaire et il est placé à une extrémité, dite mobile, de ce couvercle, cette extrémité mobile étant à l'opposé de celle par laquelle le couvercle 2 s'articule sur le socle 1. Le frotteur non représenté qui est généralement tangent au rouleau 23 dans le dépileur, , est préférablement monté solidaire du socle, ce qui permet de dissocier ce rouleau du frotteur, par simple ouverture du couvercle 2, en cas de besoin notamment en cas de bourrage de feuilles de document à télécopier à l'intérieur du boîtier.

Pour les mêmes raisons l'ouverture du couvercle 2 qui permet aussi de dissocier les têtes 14, 15 des rouleaux 11, 10 associés facilite d'autant le débourrage au niveau de ces composants, si besoin est.

Dans une forme de réalisation, l'ouverture d'accès 24 est ménagée au niveau de joint du socle 1 et du couvercle 2 en face arrière de boîtier, et la longueur du trajet de document à télécopier entre cette entrée d'accès 24 et l'ensemble d'analyse formé par le rouleau 11 et par la tête 14, via le dépileur à rouleau 23, est limitée au maximum par le positionnement de cet ensemble à proximité de l'ouverture 24 à l'extrémité dite mobile du couvercle.

Il en est de même pour le trajet de document entre l'ensemble d'analyse évoqué ci-dessus et l'ouverture 22 de sortie de document, en raison du renfoncement ménagé à l'arrière du socle pour réduire au maximum la distance entre la paroi du socle à ce niveau et cet ensemble d'analyse et par conséquent la longueur correspondante du trajet à l'intérieur du boîtier.

La tête d'analyse qui est susceptible d'être de type usuel comporte classiquement des moyens permettant d'éclairer une zone de document à télécopier et des moyens pour analyser et coder numériquement les graphismes présents dans cette zone, qui s'étend sur la largeur du document à télécopier dans l'exemple choisi, ce document étant balayé successivement sur sa longueur.

Dans la réalisation proposée un seul plateau support 26 est prévu sous les ouvertures de sortie 21 et 22 et par conséquent sous le plateau support 25 pour tant les documents provenant de l'ensemble d'analyse, via l'ouverture 22, que pour les feuilles obtenues par découpage du ruban qui sortent de l'ouverture 21, les expulsions correspondantes n'étant généralement pas simultanées, sauf si le terminal est exploitable en photocopieur.

**Revendications**

1/ Architecture de terminal téléphonique télécopieur comportant un boîtier (1) constitué d'éléments de carrosserie dissociables qui contient au moins les composants essentiels suivants:

– une tête d'analyse (14) associée à un rouleau (11), dit d'analyse, contigu, prévu pour assurer l'entraînement devant cette tête d'un document à télécopier introduit entre eux, depuis une ouverture d'accès (24) ménagée dans le boîtier et sous l'action d'un rouleau entraîneur (23) situé dans l'environnement de cette ouverture d'accès,

– une tête d'impression (15) associée à un rouleau (10), dit d'impression, contigu, prévu pour assurer l'entraînement, devant cette tête et vers une ouverture de sortie (21) du boîtier, d'un ruban (9) support d'impression qui est initialement introduit par une extrémité entre ce rouleau et cette tête d'impression et qui est stocké sous forme de bobine (8) dans le boîtier,

– au moins un moteur électrique (6) pour actionner les rouleaux et éventuellement un dispositif (7, 7A, 7B) de coupe de ruban qui est situé sur le trajet du ruban dans le boîtier entre l'ouverture de sortie et l'ensemble formé par la tête et le rouleau d'impression,

– un agencement de communication homme-machine (16, 17) permettant une commande locale du terminal téléphonique télécopieur par un usager et une signalisation locale par voie optique et/ou acoustique,

– un ensemble de circuits comprenant au moins un circuit téléphonique (4), une logique (13) de supervision du terminal téléphonique télécopieur et une alimentation en énergie (5),

caractérisée en ce que le boîtier comporte, d'une part, un socle (1) dans lequel sont regroupés les circuits correspondants respectivement au circuit téléphonique et à l'alimentation en énergie, le ou les moteurs avec les rouleaux et le dispositif de coupe que ces moteurs actionnent, ainsi que la bobine de ruban, d'autre part, un couvercle rabattable (2) qui, regroupant au moins l'agencement de communication homme-machine, la logique de supervision associée et les têtes, est articulé au niveau d'une extrémité sur une extrémité correspondante du socle pour alternativement soit se rabattre sur le socle en fermant le boîtier et en positionnant les têtes par rapport aux rouleaux qui leurs sont associés, soit s'ouvrir par basculement en donnant accès aux composants essentiels tant à l'intérieur du socle qu'à l'intérieur du couvercle.

2/ Architecture de terminal téléphonique télécopieur selon la revendication 1, caractérisée en ce que le couvercle rabattable qui porte des organes de commande manuelle (16) et des organes de signalisation locale (17) de l'agencement de communication homme-machine, comporte une face externe (18) qui sert de façade au boîtier et où apparaissent les dits organes de commande manuelle et de signalisation locale, lorsque le boîtier est fermé par rabattement du couvercle, les dits organes étant connectés aux pistes d'une carte de circuit qui est située à l'intérieur du couvercle, qui porte la logique de supervision et qui est reliée aux circuits contenus dans le socle par l'intermédiaire de liaisons souples de connexion (L) passant au niveau d'articulation entre socle et couvercle.

3/ Architecture de terminal téléphonique télécopieur selon la revendication 2, caractérisée en ce que la face externe 18 du couvercle formant façade est au moins partiellement inclinée vers l'avant du boîtier par rapport au plan d'appui du socle sur un support (2) et en ce que l'arrière du boîtier comporte trois ouvertures (24, 22, 21) qui correspondent respectivement à l'ouverture d'accès permettant l'introduction d'un document à télécopier, à une ouverture de sortie permettant l'expulsion d'un document préalablement introduit par l'ouverture d'accès, pour télécopie, et à la sortie de ruban support d'impression et qui ont des axes longitudinaux parallèles au plan d'appui du socle.

4/ Architecture de terminal téléphonique télécopieur selon la revendication 1, caractérisée en ce que la tête d'analyse est positionnée à l'intérieur du couvercle, à l'extrémité, dite mobile, de ce dernier qui est à l'opposé de l'articulation par l'intermédiaire duquel ce couvercle se rabat sur le socle, pour limiter au maximum le trajet d'un document à télécopier, dans le boîtier entre l'ouverture d'accès par où pénètre ce document et elle-même.

5/ Architecture de terminal téléphonique télécopieur selon la revendication 4, caractérisée en ce que l'ouverture d'accès est ménagée au niveau de joint entre le socle et le couvercle et à l'extrémité de ce dernier qui est à l'opposé de celle par laquelle il s'articule sur ce socle.

6/ Architecture de terminal téléphonique télécopieur selon la revendication 5, caractérisée en ce que le boîtier comporte une ouverture de sortie pour document, préalablement introduit par l'ouverture d'accès, dont l'axe longitudinal est parallèle à celui de cette derniére et au plan d'appui du socle cette ouverture étant ménagée en face arrière du socle à proximité de l'ensemble formé par le rouleau et de la tête d'analyse, à l'extrémité de socle opposée à celle où le couvercle s'articule sur ce socle, pour réduire le trajet d'un document, dans le boîtier fermé entre cet ensemble d'analyse et cette ouverture de sortie.

7/ Architecture de terminal téléphonique télécopieur selon la revendication 6 caractérisée en ce que l'arrière du socle où s'ouvre l'ouverture de sortie pour document comporte un renfoncement (27) de sa paroi au voisinage duquel l'ensemble constitué par le rouleau et la tête d'analyse est situé pour limiter au maximum le trajet d'un document entre cet ensemble et cette ouverture de sortie.

8/ Architecture de terminal téléphonique télécopieur selon la revendication 6 caractérisée en ce que le socle comporte une ouverture de sortie de ruban ménagée dans le renfoncement de paroi situé à l'arrière de ce socle et auprès duquel sont successivement positionnés le dispositif de coupe et le rouleau d'analyse pour limiter le trajet du ruban vers cette ouverture de sortie.

# FIG.1

# FIG.2

EP 0 497 693 A1

FIG.3

EP 0 497 693 A1

FIG. 4

EP 0 497 693 A1

EP 0 497 693 A1

Office européen
des brevets

**RAPPORT DE RECHERCHE EUROPEENNE**

Numero de la demande

EP    92 40 0226

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 188 865 (TEC)<br>* page 4, ligne 1 - page 10, ligne 9 *<br>--- | 1-8 | H04N1/00 |
| A | EP-A-0 299 437 (TEC)<br>* colonne 6, ligne 44 - colonne 10, ligne 44 *<br>--- | 1-8 | |
| A | GB-A-2 169 467 (CANON)<br>* page 6, ligne 19 - page 7, ligne 71 *<br><br>----- | 1-8 | |
| | | | **DOMAINES TECHNIQUES RECHERCHES (Int. Cl.5 )**<br><br>H04N |

Le présent rapport a été établi pour toutes les revendications

| Lieu de la recherche | Date d'achèvement de la recherche | Examinateur |
|---|---|---|
| LA HAYE | 31 MARS 1992 | GREVE M.P. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
......................................................................................
& : membre de la même famille, document correspondant

EPO FORM 1503 03.82 (P0402)

11